(19) **Europäisches Patentamt / European Patent Office / Office européen des brevets**

(11) **EP 1 725 856 B1**

(12) **EUROPEAN PATENT SPECIFICATION**

(45) Date of publication and mention
of the grant of the patent:
**17.06.2009 Bulletin 2009/25**

(51) Int Cl.:
***G01N 21/45*** (2006.01)

(21) Application number: **05719035.7**

(22) Date of filing: **11.03.2005**

(86) International application number:
**PCT/IT2005/000135**

(87) International publication number:
**WO 2005/088276 (22.09.2005 Gazette 2005/38)**

(54) **METHOD AND APPARATUS FOR THE TWO-DIMENSIONAL MAPPING OF THE ELECTRO-OPTICAL COEFFICIENT**

VERFAHREN UND VORRICHTUNG ZUM ZWEIDIMENSIONALEN MAPPING DES ELEKTRO-OPTISCHEN KOEFFIZIENTEN

PROCEDE ET APPAREIL POUR LE MAPPAGE EN DEUX DIMENSIONS DE COEFFICIENT ELECTRO-OPTIQUE

(84) Designated Contracting States:
**AT BE BG CH CY CZ DE DK EE ES FI FR GB GR HU IE IS IT LI LT LU MC NL PL PT RO SE SI SK TR**

(30) Priority: **17.03.2004 IT RM20040133**

(43) Date of publication of application:
**29.11.2006 Bulletin 2006/48**

(73) Proprietor: **CONSIGLIO NAZIONALE DELLE RICERCHE**
**00185 Roma (IT)**

(72) Inventors:
• **DE ANGELIS, Marella,**
**Consiglio Naz. delle Ricerche**
**I-00185 Roma (IT)**
• **FERRARO, Pietro,**
**Consiglio Naz. delle Ricerche**
**I-00185 Roma (IT)**
• **FINIZIO, Andrea,**
**Consiglio Naz. delle Ricerche**
**I-00185 Roma (IT)**
• **GRILLI, Simonetta,**
**Consiglio Naz. delle Ricerche**
**I-00185 Roma (IT)**
• **DE NATALE, Paolo,**
**Consiglio Naz. delle Ricerche**
**I-00185 Roma (IT)**
• **DE NICOLA, Sergio,**
**Consiglio Naz. delle Ricerche**
**I-00185 Roma (IT)**

• **PIERATTINI, G.,**
**Consiglio Naz. delle Richerche**
**I-00185 Roma (IT)**

(74) Representative: **Iannone, Carlo Luigi et al**
**Barzano' & Zanardo Roma S.p.A.**
**Via Piemonte 26**
**00187 Roma (IT)**

(56) References cited:
• **STORROW G M ET AL: "An analysis of the optical properties of a single-element liquid crystal device" PURE AND APPLIED OPTICS IOP PUBLISHING UK, vol. 7, no. 6, November 1998 (1998-11), pages 1411-1423, XP002330908 ISSN: 0963-9659**
• **WENGLER M C ET AL: "Poling dynamics of lithium niobate crystals" APPLIED PHYSICS B (LASERS AND OPTICS) SPRINGER-VERLAG GERMANY, vol. B76, no. 4, April 2003 (2003-04), pages 393-396, XP002330909 ISSN: 0946-2171**
• **KURIMURA S ET AL: "Optically-monitored periodical poling for fabrication of quasi-phase-matched wavelength converter" TECHNICAL DIGEST. CLEO/PACIFIC RIM 2001. 4TH PACIFIC RIM CONFERENCE ON LASERS AND ELECTRO-OPTICS (CAT. NO.01TH8557) IEEE PISCATAWAY, NJ, USA, vol. 1, 2001, pages I-120-I-121, XP002330910 ISBN: 0-7803-6738-3**

- **DE ANGELIS M ET AL: "Interferometric analysis of a lithium niobate with engineering reversed domains" PROCEEDINGS OF THE SPIE - THE INTERNATIONAL SOCIETY FOR OPTICAL ENGINEERING SPIE-INT. SOC. OPT. ENG USA, vol. 5144, 2003, pages 745-752, XP002330911 ISSN: 0277-786X**
- **NICOLA DE S ET AL: "CORRECT-IMAGE RECONSTRUCTION IN THE PRESENCE OF SEVERE ANAMORPHISM BY MEANS OF DIGITAL HOLOGRAPHY" OPTICS LETTERS, OPTICAL SOCIETY OF AMERICA, WASHINGTON, US, vol. 26, no. 13, 1 July 2001 (2001-07-01), pages 974-976, XP001110425 ISSN: 0146-9592**
- **SCHNARS U ET AL: "DIGITAL RECORDING AND NUMERICAL RECONSTRUCTION OF HOLOGRAMS" MEASUREMENT SCIENCE AND TECHNOLOGY, IOP PUBLISHING, BRISTOL, GB, vol. 13, no. 9, September 2002 (2002-09), pages R85-R101, XP001170845 ISSN: 0957-0233**

**Description**

The present invention concerns a method for the two-dimensional mapping of the electro-optical properties of transparent objects, a cell to be used in such a method for the application of an electrical field to objects, and relevant apparatus.

More particularly, the present invention is concerned with a method for determining the electro-optical properties of transparent objects and for the two-dimensional mapping thereof. The method applies in particular to those objects and devices, for which one desires to know the uniformity of their response to an electrical field, and to those objects which present structures with different electro-optical structures and of which one desires to know the two-dimensional mapping. The invention concerns further a cell into which can be placed such transparent materials and is suited to create in them an electrical field according to the needs of the method of the invention. Last but not least, the invention concerns an apparatus which realises the method according to the invention, notably using the cell according to the invention.

There are materials, as for example crystals without centre of symmetry, in which it is present a birefringence induced by the linear electrical field, which is called linear electro-optic effect or Pockels effect; it is proportional to the electrical field and therefore to the applied voltage.

The delay of a light beam crossing such crystals can be changed at will by means of an applied electrical field and this is the reason why such crystals are often used as phase modulators, polarisation modulators, in amplitude modulators, as optical switches and in general as optical and photonic devices (see A. Yariv "Quantum Electronics" Wiley Ed., New York 1988).

During last years, a great effort has been done in the research in order to produce new crystals suitable to show a good electro-optical effect, and the development of such materials adds continuously new crystals to the list of those already existing; it is therefore extremely interesting to have at disposal high-resolution techniques, which are reliable and easy-to-use for studying of electro-optical properties of crystals.

In a large number of applications, both in scientific and industrial field, a need exist to measure with enough accuracy electro-optical properties, notably the so-called electro-optical coefficient, of nonuniform structures, and therefore to have a multi-dimensional map of the structure under examination.

For example, in crystals of photonic interest, the ferroelectric polarisation of the crystal is inverted by means of a process called of alignment of the ferroelectric domains or "poling", induced by an external electrical field. Such a process generates inside the crystal micrometric or submicrometric structures distributed according to 1, 2 or 3 dimensions, which interact differently with the light radiation. In this type of structure, it is crucial the knowledge of phase variation induced by the crystal on the incident light, both in rest conditions and under conditions of externally induced stresses, as for example an electrical field. Since the structure can be either one-dimensional or bi- or three-dimensional, the need of having at disposal measurement techniques for two- or multi-dimensional mapping of the phase response of the crystals, which have undergone engineering processes of ferromagnetic domains, is nowadays more and more felt. For the same reason, is today necessary a technique which allows the on-site monitoring of the formation of the ferroelectric structures.

From now on, we will focalise on the linear electro-optical or Pockels effect, it should be however clear that what we will state will be also valid for the other electro-optical properties (for example, the Kerr or quadratic electro-optical effect, the piezoelectric effect or, better, the inverted piezoelectric effect: it deals with a variation in the shape and/or dimensions of the sample when is placed in an electrical field).

The methods used at present for measuring the electro-optical properties are of local type, concerning only a small area of the sample, and provide an average information in the analysed area.

Up to now, several techniques have been proposed for measuring the electro-optical coefficients in birefringence crystals. Some are polarimetric, as the Senarmont type (see in this concern P. C. Lemaire, and M. P. Georges, Optical Material 4, (1995) 182-187; K. Chah, M. Aillerie, M. D. Fontana, and G. Malovichko, Optics Communication 176, (2000) 261-265), some others are interferometric, since they use interferometers of Michelson or Mach-Zehnder type. The former are simple experimental apparatuses, the latter requires the use of more complex apparatuses and are very sensitive to vibrations.

During last years, many improvements have been done in the interferometric-type techniques, enabling the reach of high sensibilities in the measurements. It has been used for example a Michelson interferometer (P. Ney, A. Maillard, M. D. Fontana, and K. Polgàr, J. Opt. Soc. Am. B 17, (2000) 1158-1165), which includes an electro-optical modulator in one of the branches of the interferometer. With this apparatus, one is able to determine very small differences of optical path, by measuring the phase shift of the reference modulator which is needed to compensate for the phase shift caused by the application of the static electrical field of the crystal.

It has been proposed recently (P. Delaye, and G. Roosen, Optics Communication 214, (2002) 199-206) a technique based on a Mach-Zehnder interferometer, which enables measurements having a good sensibility without any stabilisation of the apparatus, thanks to an innovative data processing system.

Another interferometric method with signal modulation exists for precise measurements of electro-optical coefficients (J. A. de Toro, M. D. Serrano, A. Garcìa Cabañes, and J. M. Cabrera, Optics Communication 154 (1998) 23-27); a good accuracy is reached by obtaining the signal of first and second harmonic of the frequency modulation, while the phase is electronically varied along the two interference orders.

Further, it has been developed a method (X. Yin, Q. Pan, W. Shi, and C. Fang, Applied Optics 41 (2002) 5929-5932) which is based on a Twyman-Green interferometer which uses the piezo-electric effect of a quartz crystal in order to compensate for the optical path changements caused by the electro-optical effect of the sample.

According to another approach (J. Koo, C. Lee, J. H. Jang, K. No, and B. Bae, Applied Physics Letters 76 (2000) 2671-2673), the electro-optical coefficient is measured by using an interferometer with two beams provided with perpendicular, linear polarisations: an electrical field applied to the sample to be analysed induces different phase shifts between the interfering beams.

The above-mentioned measurements are point measurements and are integrated on the sample thickness. As a consequence, an extension of such techniques to a two-dimensional mapping requires long measurement periods to disadvantage of the correlation between measures carried out at different times. These aspects make the carried out measurements operations slow, expensive and not much reliable.

Moreover, for the application of the electrical field to the sample to be analysed, it is customary to deposit transparent solid electrodes which prove to be invasive and not easy to be realised unless one has specific and expensive equipments.

In the article of Storrow G.M. et al. "An analysis of the optical properties of a single-element liquid crystal device", Pure and Applied Optics IOP Publishing UK, vol.7, no.6, November 1998(1998-11), pages 1411-1423, it is disclosed a method for phase imaging for measuring optical properties of an electrically controlled birefrangent liquid crystal at electrode edges, i.e. in the part of the material subjected to fringing fields. Such a method uses a Michelson interferometer and let the beam pass through the sample twice. It uses the phase-stepping interferometry technique, where three images have to be detected in order to retrieve the phase difference between the beam transmitted by the sample and the reference beam, each time for a specified value of the external voltage.

In the article of De Angelis et al. "Interferometric analysis of a lithium niobate with engineering reversed domains", Proceedings of the SPIE SPIE-Int- Soc. Opt. Eng. USA, vol. 5144, 2003, pages 745-752, it is disclosed a method for measuring discontinuities of electro-optical properties in materials transparent to the electromagnetic radiation, using a reflective grating interferometer. The method comprises the acquisition of two images of a sample not subjected to any electrical field, one with the sample and one without the sample in the experimental set-up.

It is an object of the present invention to provide a method for measuring the electro-optical coefficient of transparent materials, solving the above-mentioned drawbacks.

It is further specific object of the present invention an apparatus for measuring the electro-optical properties of transparent materials solving the above-mentioned drawbacks.

It is specific subject matter of this invention a method for measuring and two-dimensional mapping of the electro-optical properties of materials transparent to the electromagnetic radiation, the method using a Reflective Grating Interferometer wherein a substantially coherent and monochromatic electromagnetic beam is projected onto the transparent material to be analysed, which is subjected to an homogeneous electrical field, in such a way that the beam is enlarged as far as to have a two-dimensional cross section comparable with the dimensions of the material to be analysed, and dividing said electromagnetic beam in two parts, in such a way that one part crosses the material, the other part travels undisturbed, the two beams being recomposed on a **diffraction grating representing the recombination element** of the Reflective Grating Interferometer, the beam exiting from said Reflective Grating Interferometer being detected by means of a device suited to two-dimensionally detection of such beam, the method further comprising the following subsequent steps:

E. obtaining, by means of an algorithm of digital holography, from the detected electromagnetic beam, which is representative of a two-dimensional image, the phase variation $\Delta\phi$ (x,y) of the electromagnetic beam which has crossed the material with respect to that of the undisturbed electromagnetic beam;

F. for a number of *P* times, varying the applied electrical field value and repeating the preceding detection steps;

G. calculating, **for each pixel,** the two-dimensional **electro-optical parameter** $r'_{13}$ *(x, y)* of the material under examination, using the formula:

$$\Delta\Phi(x,y) = \left(\frac{\pi}{\lambda}\right) \cdot \left[ -n_0^3(x,y) \cdot r'_{13}(x,y) \cdot V \right]$$

where $\Delta\Phi$ is the phase difference, $V$ is the value of the voltage difference applied to the material to be analysed, and $n_0$ is the ordinary refraction index.

Preferably according to the invention, said transparent material to be analysed is a non-centre-symmetrical crystal.

Preferably according to the invention, the dimension perpendicular to the surface of the material, of which one detects the two-dimensional electro-optical properties, have thickness of less than 5 mm.

Preferably according to the invention, the dimension perpendicular to the surface of the material, of which one detects the two-dimensional electro-optical properties, have thickness of less than 0,5 mm.

Preferably according to the invention, the algorithm of digital holography utilises the numerical calculation of the diffraction integral in the Fresnel approximation, according to the following steps:

- transforming the detected interferometric image into a digitised interferogram, composed by a number of $V_r$ values of signal intensity, described by an array $H(n\cdot\Delta x, m\cdot\Delta y)$ of $N\cdot M$ values, where n and m are integers, $\Delta x$ and $\Delta y$ are the sampling intervals along the $x$ and $y$ axis respectively and $(N\cdot\Delta x)(M\cdot\Delta y)$ is the area of the acquired hologram;
- multiplying the digitised hologram $H(n\cdot\Delta x.m\cdot\Delta y)$ by a digitised replica of the reference beam $R(n\cdot\Delta x, m\cdot\Delta y)$, whereby obtaining the relation:

$$H(n\Delta x, m\Delta y)\cdot R(n\Delta x, m\Delta y) = R|R|^2 + R|O|^2 + RR^*O + RRO^*$$

- reconstructing the image from the plane in which it has been detected to the plane in which the material to be analysed is put, by means of numerical calculation of the diffraction integral in the Fresnel approximation with the discrete formulation of the Fresnel integral expressed in terms of the Fourier transform, that is:

$$\Psi(l\Delta x, k\Delta y) = A e^{\frac{l\pi}{\lambda d}(l^2\Delta\xi^2 + k^2\Delta\eta^2)} DFT\lfloor R(n\Delta, m\Delta y)H(n\Delta, m\Delta y)e^{\frac{i\pi}{\lambda d}(n^2\Delta x^2 + m^2\Delta y^2)}\rfloor_{l,k}$$

where $\lambda$ is the wavelength of the source, A is a complex constant, $n, m, l, k$ are integers $(-N/2+1<n,l<N/2 \ e \ -M/2+1 <m,k<M/2)$, DFT is the discrete Fourier transform, $\Delta x$ and $\Delta y$ are the sampling intervals of the interferogram, d is the distance between the plane of the detection device and the observation plane, and, finally, $\Delta\xi$ and $\Delta\eta$ represent the spatial sampling intervals in the observation plane and are defined by $\Delta\xi = \lambda d/N\Delta x$ and $\Delta\eta = \lambda d/M\Delta y$;

- calculating the phase difference according to the formula:

$$\Delta\phi(l\Delta x, k\Delta y) = \arctan\frac{\text{Im}\Psi(l\Delta x, k\Delta y)}{\text{Re}\Psi(l\Delta x, k\Delta y)}$$

Preferably according to the invention, the method comprises a processing step of the digitised hologram array, and a step of reconstruction in the complex plane starting from the digitised hologram processed in the first step, in the reconstruction step being effectuated a discrete Fresnel transformation starting from an array of $V_e$ values, comprising said $V_r$ values of signal intensity values corresponding to as many elementary pixels of the holographic image, the pixel sizes being equal to the holographic image sampling intervals, as well as an integer number $p = V_e - V_r > 0$ of constant values equal to $OS$, corresponding to as many pixels of sizes equal to the ones of the others.

Preferably according to the invention, said $p$ constant values are null values ($OS = 0$).

Preferably according to the invention, said $p$ values are arranged externally to said array of $V_r$ values.

Preferably according to the invention, said $p$ values are arranged in a symmetrical way.

Preferably according to the invention, said $p$ values are arranged in a non-symmetrical way.

Preferably according to the invention, said number $V_e$ of values is inversely proportional to the desired pixel size to be obtained for the reconstructed image.

Preferably according to the invention, the digitised hologram is a square array of $V_r = N_r \cdot M_r$ values, each value corresponding to a square pixel of sizes $\Delta x, \Delta y$.

Preferably according to the invention, the hologram reconstructed in the second step is represented by a square array of $V_e = N_e \cdot M_e$ values, each value corresponding to a square pixel of sizes $\Delta\xi = (\lambda d/N_e\Delta x)$ and $\Delta\eta = (\lambda d/M_e\Delta y)$, $\lambda$

being the wavelength of the wave beam striking the object of which the hologram is recorded, and d the distance between the detection device and the object of which the hologram is detected, $\Delta\xi$ and $\Delta\eta$ being the reconstructed holographic image sampling intervals.

Preferably according to the invention. $N_e = (\lambda d/\Delta x^2)$, $M_e = (\lambda d/\Delta y^2)$, $\Delta\xi = \Delta x$, $\Delta\eta = \Delta y$.

Preferably according to the invention, after the second step, if each holographic image sampling interval is not equal or less than a certain threshold, the number of values *p* added to the digitised hologram array is increased and the second step is carried out again.

Preferably according to the invention, said threshold is a function of the signal-to-noise ratio of the holographic image.

It is specific further subject matter of the present invention an apparatus for measuring and two-dimensional mapping of the electro-optical properties of transparent materials, comprising:

- a source of coherent and single-mode electromagnetic beam,
- a system of transmission and projection of said beam,
- a Reflective Grating interferometer for the treatment of the projected electromagnetic beam,
- a device for detecting of the electromagnetic beam exiting from the interferometric system and a processing unit for processing the information relevant to the detected electromagnetic beam,
- a cell wherein the material to be analysed has to be placed, the cell and said material being crossable by at least a part of the projected electromagnetic beam, the cell being suited to crate an electrical field in the material,
- **a diffraction grating on which impacts the part of the electromagnetic beam which has crossed the material,**

the apparatus being characterised in that it implements the method according to the subject-matter of the present invention.

Preferably according to the invention, the electromagnetic beam is let from the source in a single-mode, polarisation-maintaining fibre through the fibre coupling system.

Preferably according to the invention, the electromagnetic beam is directed towards the Reflective Grating Interferometer in such a way that at least a part of it crosses the cell.

Preferably according to the invention, the electromagnetic beam is emitted form an end of the single-mode, polarisation-maintaining fibre towards a parabolic mirror, which directs said electromagnetic beam towards the Reflective Grating Interferometer, in such a way that a part of the beam crosses the material in the cell and another part arrives undisturbed at the interferometric system.

Preferably according to the invention, the parabolic mirror is placed at a distance from the end of the single-mode, polarisation-maintaining fibre such that the electromagnetic beam is collimated and expanded to dimensions which are comparable to those of the material.

Preferably according to the invention, the Reflective Grating Interferometer (5) comprises a wave front division interferometer.

Preferably according to the invention, the Reflective Grating Interferometer comprise a flat mirror mounted on adjustable supports on which impacts the part of the electromagnetic beam which has not crossed the material.

Preferably according to the invention, the mirror is controlled so that the electromagnetic beam is redirected towards the diffraction grating.

Preferably according to the invention, the processing electronic unit generates a signal suited to control said adjustable supports.

Preferably according to the invention, the processing electronic unit generates signals suited to control the emission of the coherent light by said source and/or the electrical field applied to the material.

Preferably according to the invention, the detection device of the electromagnetic beam is a two-dimensional array of detectors of electromagnetic radiation.

Preferably according to the invention, the detection device is a CCD camera.

Preferably according to the invention, the processing unit processes the data according to step E and/or G of the method according to the subject-matter of the invention.

The invention will be now described, by way of illustration and not by way of limitation, by particularly referring to the drawings of the enclosed Figures, in which:

- Figure 1 shows a schematic representation of the apparatus according to the invention for the two-dimensional mapping of the electro-optical properties of samples of transparent materials;
- Figure 2 shows a schematic representation of the cell according to the invention;
- Figure 3 shows a diagram in which it is reproduced the phase map deformed by the electro-optical effect of a sample of transparent material, obtained by elaborating the interferometric signal;
- Figure 4 shows a diagram wherein it is reproduced the phase linear variation induced on the light radiation crossing the sample, in the event that the sample is nominally uniform in the electro-optical behaviour in the *XY* plane, as a function of the voltage applied to the sample;

- Figure 5 shows a diagram in which it is reproduced a two-dimensional mapping of the electro-optical properties of the sample relevant to Figure 4;
- Figure 6 shows a three-dimensional graph wherein it is plotted the two-dimensional mapping of the electro-optical properties of the sample relevant to Figures 4 and 5, treated beforehand.

The method described herein briefly comprises the following phases:

- a monochromatic, coherent light beam is produced, which is divided into two parts, a part crosses the sample whose electro-optical coefficient is to be measured (object beam O) and its phase is altered as a function of the electro-optical coefficient of the sample, the other part travels undisturbed (reference beam R) and provide the reference phase of the light radiation;
- the two beams are recomposed on a diffraction grating which represents the recombination element of the utilised interferometric system;
- by observing the interference signal, one deduces the phase variation, and therefore the wave front variation, of the radiation beam which has crossed the sample with respect to that of the undisturbed radiation; such a signal is recorded by an integrated, two-dimensional array of radiation detectors;
- such a phase variation is deduced for different values of the electrical field applied to the sample, afterwards one executes as many measurements as electrical field values are applied to the sample;
- knowing the applied voltage difference and the refraction index of the sample at the wavelength of the incident light, one deduces the contribution of the electro-optical effects of the material under examination by means of a two-dimensional mapping.

For expository clarity, before going deeply into the matter of the analysis that leads to the calculation of the two-dimensional, electro-optical properties, it is illustrated an embodiment realising the apparatus which implements the method according to the Invention.

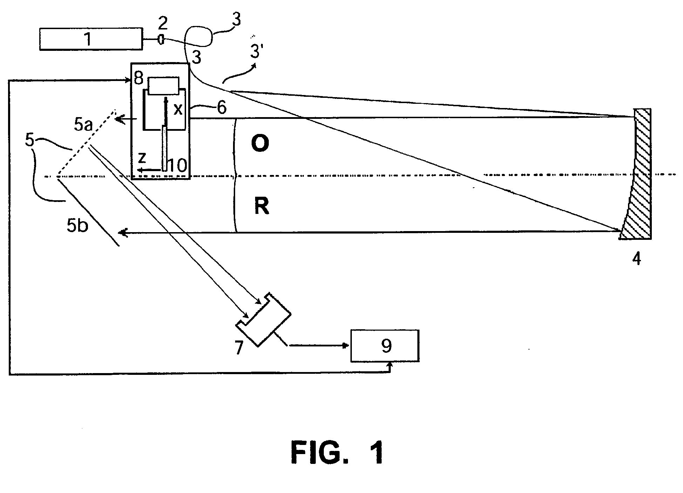

With reference to Figure 1, all the parts which compose the apparatus according to a preferred embodiment are listed in the following:

1 laser source,
2 system of fibre coupling,
3 single-mode, polarisation-maintaining fibre,
4 parabolic mirror,
5a diffraction grating,
5b flat mirror on stable and adjustable supports (tiltmeters),
6 cell for the sample to be analysed,
7 CCD camera for acquiring images,
8 signal generator and high-voltage amplifier,
9 electronic processing unit.

A coherent laser source 1 generates a laser beam, which is launched by means of the coupling means 2 in an optical single-mode fibre 3 which is suitable to maintain the polarisation.

The beam exits from the optical fibre 3 with a highly diverging spherical wave front and is collimated by means of a parabolic mirror 4 (for example of the diameter of around 15 cm).

One part of the beam crosses the sample, the other travels undisturbed. The cell 6 containing the sample is suitable to provide a high-quality optical access thanks to two quartz optical windows. Further, thanks to two seal chambers, it allows to inject a liquid electrode which therefore is in contact with both sides of the sample and assures a uniform electrical field on the sample.

The liquid electrode is in general constituted by any conductive solution, for example by water with an ion concentration ranging from the average aqueduct concentration (about 180 mg/l) to that of a lithium-clorure-water solution (about 21200 mg/l).

When an electrical field is applied to the sample, the object beam O undergoes a phase variation.

The electrical field applied to the sample corresponds to a high-voltage signal produced by the amplifier 8 which is powered by a function generator.

The system comprising generator and amplifier is controlled by an electronic processing unit 9, so as to predefine the type of field that one wishes to use for characterising the sample (constant, or linear-"ramp" signal or other type of signal), and in this way to adjust the emission of the source 1.

EP 1 725 856 B1

The part O of the light beam crossing the sample arrives directly on the diffraction grating 5a and is diffracted towards the CCD camera 7, the part R of the light beam travelling undisturbed is first reflected on a flat mirror 5b and subsequently diffracted by the grating 5a on the CCD camera, which is in general constituted by a two-dimensional integrated array of radiation detectors.

With a suitable choice of angles of incidence, both beams superimpose on grating 5a in order to generate an interference image which carries the information of deformation of the phase variation undergone by the wave front of the light beam O crossing the sample 10 with respect to the wave front of the undisturbed beam R.

As it can be seen, the analysis of the wave front is made utilising a division-of-wave-front interferometer 5 wherein the recombination element 5a is a diffraction grating (see also, for example, Patent Request N° RM96A000178 filed on 19th March 1996 and the article of M. de Angelis et al., in Pure and Applied Optics, vol.24 (1995) 761-765).

The digitised image detected by the device 7 is then stored in the processing electronic unit 9.

The recorded interferometric image is analysed by means of an algorithm of digital holography, that is described in the following. This algorithm enables the two-dimensional reconstruction of the phase profile of the object beam which has undergone the variation (see also, for example, the article of S. De Nicola et al., Optics Letters, 26(13) 2001,974-876 and the Patent request N° RM2003A000398 deposed the 13th August 2003).

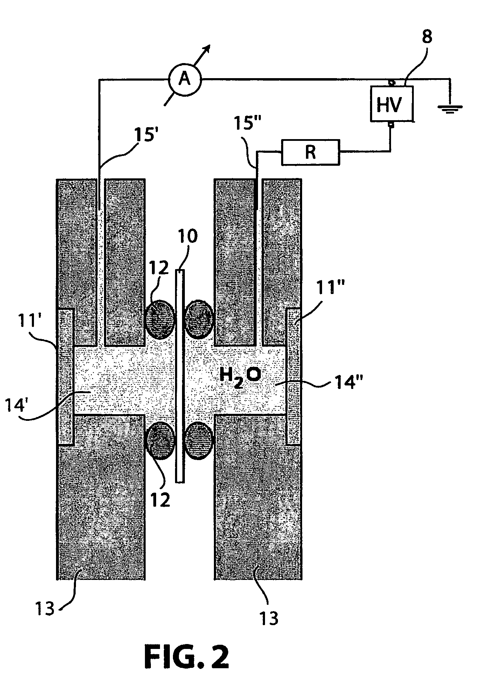

In figure 2 is reproduced a schematic representation of the cell that enables to apply an uniform electrical field and to assure the optical access to the material sample to be analysed.

The configuration of the cell 6 is of "longitudinal" type, i.e. the electrical field is directed in the same propagation direction of the light needed to measure the phase variation induced in the crystal 10 under the effect of the electrical field.

One of the sample utilised for verifying the working of the apparatus according to the invention is composed by a crystal of lithium niobate of the thickness of about 0,5 mm in which are present two bordering regions characterised by different electro-optical behaviours.

In the case of this sample, on which the electrical field is applied, the phase variation is mainly determined by the linear electro-optical and the piezoelectric effects.

The sample could be thinner than the utilised one, since the apparatus according to the invention can appreciate phase variation, over optical paths, smaller than a micron.

The sample is fixed by two rings 12 which are made of rubber or every other type of material that assures the seal. The rubber rings 12 allows to form two water seal chamber 14',14" wherein can be introduced a liquid electrode (generally a ion-rich water solution). In this manner, it is possible to apply to the sample an homogeneous electrical field.

Two quartz windows 11',11" enable a high-quality optical access, in the sense that they introduce deformations of negligible magnitude in the wave front of the radiation crossing the sample 10.

The output cable of a high-voltage amplifier 8 is connected directly to the liquid contained in the seal chambers in order to provide the sample with the necessary voltage.

The cell for use in the apparatus of the invention is therefore conceived so as to assure a high-quality optical access and at the same time to apply the necessary electrical field by means of liquid electrodes 15',15": this expedience allows to avoid the deposition of transparent, solid electrodes which are expensive and further are invasive since their removal is possible only by means of chemical processes based on acids.

Coming now to the method of calculation of the electro-optical properties according to the invention, the effects of an electrical field on the propagation are properly expressed by the variations of the refraction indexes $1/n_i^2$, with $i = 1,...,6$ and corresponding to the components $x, y, z, xy, xz, yz$, caused by the arbitrary electrical field E and defined by the following equation (1):

$$\Delta\left(\frac{1}{n^2}\right) = \sum_{j=1}^{3} r_{ij} E_j$$

where the sum is made on the three components of the electrical field $E_j$ and $r_{ij}$ is the electro-optical tensor which has 18 independent elements and can be written as a 6 x 3 array.

The tensor is not null only for crystals which are not centre-symmetric.

The form of the tensor $r_{ij}$ can be deduced from the crystal's symmetry, that imposes which of the elements of the tensor are null and which relations exist between the remaining elements. In the case of the lithium niobate, for instance, the tensor is of the type given by the following expression (2):

8

$$r_{ij} = \begin{vmatrix} 0 & -r_{22} & r_{13} \\ 0 & r_{22} & r_{13} \\ 0 & 0 & r_{33} \\ 0 & r_{42} & 0 \\ r_{42} & 0 & 0 \\ -r_{22} & 0 & 0 \end{vmatrix}$$

Where one sees that only 4 independent elements are necessary to describe the effect of electrical field.

For example, to measure the term $r_{13}$ one uses a "longitudinal" configuration: the uniaxial crystal, in the absence of applied electrical field, is placed in such a way that the optical axis is along the direction of light propagation and thus the applied electrical field as well. For such a type of alignment, the application of the electrical field does not change the polarisation state of the light, rather it varies the phase of the light radiation crossing the sample.

Besides the variation of the refraction index due to the linear, electro-optical effect, there is a variation of the crystal thickness caused by the piezoelectric effect which depends on the components of the so-called "piezoelectric strain" tensor $d_{33}$ in a way analogous to the dependence of the refraction index on the electro-optical tensor. In the end, the variation of the light radiation phase can be expressed by the following formula (3):

$$\Delta\Phi(x,y) = \left(\frac{\pi}{\lambda}\right) \cdot \left[ -n_0^3(x,y) \cdot r_{13}(x,y) + 2n_0 \cdot d_{33}(x,y) \right] \cdot V =$$

$$= \left(\frac{\pi}{\lambda}\right) \cdot \left[ -n_0^3(x,y) \cdot r'_{13}(x,y) \cdot V \right]$$

where with $r'_{13}$ it is indicated the so-called electro-optical parameter corresponding to the overall contribution of the linear electro-optical effect and of the piezo-electric effect, $r_{13}$ is the electro-optical coefficient expressed in m/V, $n_0$ is the ordinary refraction index, $V$ is the voltage difference in Volt and $\lambda$ is the wavelength in metres.

In order to measure the $r_{33}$ term, a so-called "transversal" configuration is used, in which the applied electrical field is perpendicular to the light propagation direction and the latter is perpendicular to the optical axis of the crystal. Other analogous configurations are possible in order to measure the remaining elements of the electro-optical tensor.

In order to extract the phase profile of the wave front deformed by the sample due to the electro-optical effect, the interferometric signal is analysed by means of an algorithm called of digital holography and hereafter described.

The interference image can be described in terms of two-dimensional distribution of intensity, according to the following formula (4):

$$H(x,y) = |R(x,y)|2 + |O(x,y)|2 + R^*(x,y)O(x,y) + R(x,y)O^*(x,y)$$

where $R$, $O$, $R^*$ and $O^*$ are respectively the reference beam, the object beam and their complex conjugates.

When detected by the image-detecting device (CCD camera), the interferometric image is transformed in a digitised interferogram, composed by a number of signal intensity values.

The image is acquired, digitised and stored on an electronic processing device. The digitised image is called "digital hologram" and is described by an array $H(n \cdot \Delta x, m \cdot \Delta y)$ of $N \cdot M$ values, obtained by the two-dimensional spatial sampling of the interferogram $H(x,y)$, where n and m are integers, $\Delta x$ and $\Delta y$ are the sampling intervals along x and $y$ axis respectively, and $(N \cdot \Delta x)(M \cdot \Delta y)$ is the area of the acquired hologram image.

The process of numerical reconstruction of the wave front of the object beam is based on two steps.

In the first step, the digitised hologram $H(n,m)$ has to be multiplied by a digitised replica of the reference beam $R(x,y)$, obtaining the following relation (5):

$$F(n\Delta x, m\Delta y) = H(n\Delta x, m\Delta y) \cdot R(n\Delta x, m\Delta y) = R|R|^2 + R|O|^2 + RR^*O + RRO^*$$

where the first two terms correspond to the zero order of diffraction, from the third and/or fourth terms being possile to deduce the image of the observed object.

The second step of the propagation process consists in the reconstructing of the image from the plane in which the array of radiation detectors is placed to the plane in which the object is put. Such a reconstruction can be made through numerical calculation of the diffraction integral in the Fresnel approximation.

The advantages of such an approximation is based on the fact that its computation is simple and can be executed in a very rapid manner. In the case of the Fresnel approximation, the numerical reconstruction will be effectuated by means of a discrete formulation of the Fresnel integral expressed in terms of Fourier's transform, i.e. according to the following formula (6):

$$\Psi(l\Delta x, k\Delta y) = A e^{\frac{l\pi}{\lambda d}(l^2\Delta\xi^2 + k^2\Delta\eta^2)} DFT\left[R(n\Delta, m\Delta y)H(n\Delta, m\Delta y)e^{\frac{i\pi}{\lambda d}(n^2\Delta x^2 + m^2\Delta y^2)}\right]_{l,k}$$

where $\lambda$ is the wavelength of the source, A is a complex constant, $n, m, l, k$ are integers $(-N/2+1<n)<N/2$ and $-M/2+1<m, k<M/2)$, DFT is the discrete Fourier transform, that can be calculated in a fast way making resort to the various algorithms of Fast Fourier Transform (FFT) reported in literature, $\Delta x$ and $\Delta y$ are the sampling intervals of the interferogram (therefore in the camera plane), d is the distance between the camera plane and the reconstruction plane, and finally $\Delta\xi$ and $\Delta\eta$ represent the sampling spatial intervals in the reconstruction plane and are defined by: $\Delta\xi = \lambda d/N\Delta x$ e $\Delta\eta = \lambda d/M\Delta y$.

Once $\Psi(l\Delta x, k\Delta y)$ has been calculated, it is possible to obtain both the intensity and the complex amplitude of the image. For our purposes, the phase is given by the following expression (7):

$$\Delta\phi(\Delta x, \Delta y) = \arctan\frac{\text{Im}\Psi(l\Delta x, k\Delta y)}{\text{Re}\Psi(l\Delta x, k\Delta y)}$$

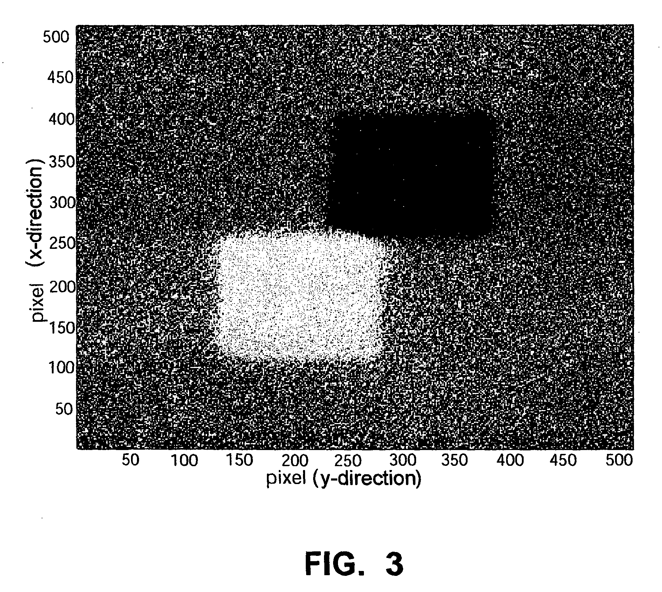

The phase profile obtained by means of the analysis process of digital holography, for the above-mentioned lithium-niobate sample, is shown in figure 3, wherein the two orders of diffraction of the Fresnel integral are recognisable.

The just described analysis process of the interferometric image enables the numerical reconstruction of the image on the crystal plane and the focusing of the object with a direct correspondence between phase map and sample's coordinates.

Other algorithms of analysis of interferometric images need the addition of lens in the experimental apparatus and relevant optical focusing, and do not assure the direct correspondence in dimensions of the sample and image.

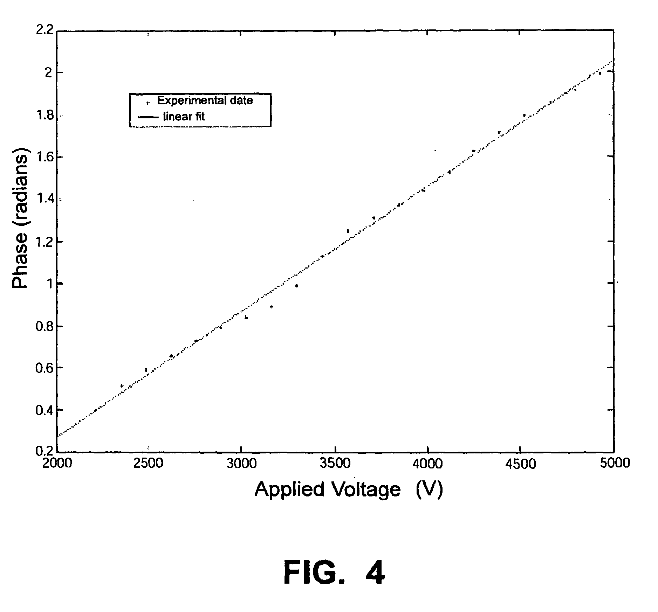

In figure 4 the diagram of the phase variation induced on the light radiation crossing the lithium-niobate sample is reported, in the case in which the sample is nominally uniform, as a function of the voltage applied to the sample.

According to equation (3), the straight line best approximating experimental data has been plotted. Such a straight line has been deduced, in the specific example, using the least squares method that provides the best estimation of the straight line slope. From the latter and the knowledge of the ordinary refraction index under examination and of the light wavelength, one deduces the value of the electro-optical parameter $r'_{13}$.

The process just described that leads to the estimation of the electro-optical coefficient can be applied to any point individuated by the coordinates (x,y) or region of the phase map, shown in figure 4. In such a way, to each point in the plane $xy$ of the sample under examination is associated an electro-optical coefficient's value. Such association is made contextually for all the points, thus by only one measure one obtains the electro-optical parameter of the sample.

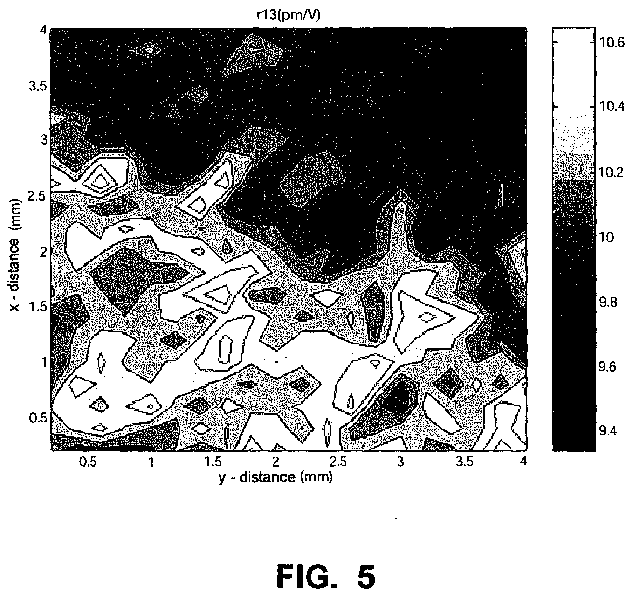

Such result is shown in figure 5, wherein it is reported the two-dimensional mapping of the electro-optical parameter $r'_{13}$ of the sample nominally uniform on the plane $XY$, on which the measurement procedure highlights different values of the electro-optical parameter itself, expressed in pmN (picometers/Volt).

The right-hand column of figure 5 shows the distribution of the values obtained for the given sample: the average value of the electro-optical parameter obtained for this sample is 10 pmN.

The same procedure has been applied for an intentionally nonuniform sample, in which there is a structure with regions with different behaviour.

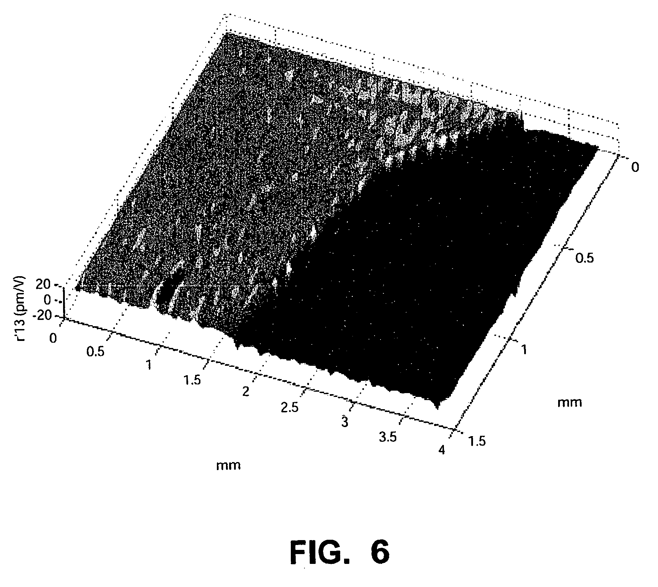

The results is recognisable in figure 6, where it is reported the two-dimensional mapping of the electro-optical parameter of a lithium-niobate sample differently treated on two parts by means of the alignment or "poling" technique, with which two opposite ferromagnetic domains are created. The results show that in the sample are present two ferromagnetic domains oriented along opposite directions and having different behaviour under the action of the electrical field.

The apparatus according to the invention can have configurations which are different from the one described above and can be realised with optical components without compromising or changing the apparatus itself.

To conclude, by means of the method and apparatus according to the invention, one has the possibility to determine with a single measurement operation the optical, two-dimensional behaviour of a sample of which one wishes to know the response to an applied electrical field. In particular, it can be extracted a two-dimensional mapping of the electro-optical behaviour of the sample using a single measure.

Moreover, the sample does not undergo any type of invasive treatment and is thus unaltered after the effectuated investigation.

The invention sets itself in the technical field of optics and in the applicative one of the materials' characterisation and manufacture of optical and photonic equipments. Its principal uses are in the measurement of electro-optical properties and in the characterisation of materials utilised in optics and photonics as electro-optical modulators.

The method and apparatus according to the invention enables the estimation of the uniformity of the electro-optical characteristics of a sample under the effect of an applied electrical field. They enable also to analyse complex structures in which are present zones of different nature as ferroelectric domains with different orientation in birefrangent crystals.

Further, the apparatus according to the invention presents particular characteristics of easiness of use, versatility and compactness.

The preferred embodiments have been above described and some modifications of this invention have been suggested, but it should be understood that those skilled in the art can make variations and changes, without so departing from the related scope of protection, as defined by the following claims.

**Claims**

1. Method for measuring and two-dimensional mapping of the electro-optical properties of materials transparent to the electromagnetic radiation, the method using a Reflective Grating Interferometer (5) wherein a substantially coherent and monochromatic electromagnetic beam is projected onto the transparent material to be analysed, in such a way that the beam is enlarged as far as to have a two-dimensional cross section comparable with the dimensions of the material (10) to be analysed, and dividing said electromagnetic beam in two parts, in such a way that one part crosses the material (O), the other part travels undisturbed (R), the two beams (O,R) being recomposed on a **diffraction grating (5a) representing the recombination element** of the Reflective Grating Interferometer (5), the beam exiting from said Reflective Grating Interferometer (5) being detected by means of a device (7) suited to two-dimensionally detection of such beam **characterised in that** the transparent material to be analysed is subjected to an homogeneous electrical field, and the method further comprises the following subsequent steps:

   E. obtaining, by means of an algorithm of digital holography, from the detected electromagnetic beam, which is representative of a two-dimensional image, the phase variation $\Delta\phi$ (x,y) of the electromagnetic beam (O) which has crossed the material (10) with respect to that of the undisturbed electromagnetic beam (R);

   F. for a number of P times, varying the applied electrical field value and repeating the preceding detection steps;

   G. calculating, **for each pixel,** the two-dimensional **electro-optical parameter** $r'_{13}$ *(x, y)* of the material (10) under examination, using the formula:

$$\Delta\Phi(x,y) = \left(\frac{\pi}{\lambda}\right) \cdot \left[-n_0^3(x,y) \cdot r'_{13}(x,y) \cdot V\right]$$

   where $\Delta\Phi$ is the phase difference, V is the value of the voltage difference applied to the material (10) to be analysed, and $n_0$ is the ordinary refraction index.

2. Method according to claim 1, **characterised in that** said transparent material (10) to be analysed is a non-centre-symmetrical crystal.

3. Method according to claim 1 or 2, **characterised in that** the dimension perpendicular to the surface of the material (10), of which one detects the two-dimensional electro-optical properties, have thickness of less than 5 mm.

4. Method according to claim 3, **characterised in that** the dimension perpendicular to the surface of the material (10), of which one detects the two-dimensional electro-optical properties, have thickness of less than 0,5 mm.

5. Method according to any claim 1 to 4, **characterised in that** the algorithm of digital holography utilises the numerical calculation of the diffraction integral in the Fresnel approximation, according to the following steps:

- transforming the detected interferometric image into a digitised interferogram, composed by a number of $V_r$ values of signal intensity, described by an array $H(n \cdot \Delta x, m \cdot \Delta y)$ of $N \cdot M$ values, where $n$ and $m$ are integers, $\Delta x$ and $\Delta y$ are the sampling intervals along the $x$ and $y$ axis respectively and $(N \cdot \Delta x)(M \cdot \Delta y)$ is the area of the acquired hologram;
- multiplying the digitised hologram $H(n \cdot \Delta x, m \cdot \Delta y)$ by a digitised replica of the reference beam $R(n \cdot \Delta x, m \cdot \Delta y)$, whereby obtaining the relation:

$$H(n\Delta x, m\Delta y) \cdot R(n\Delta x, m\Delta y) = R|R|^2 + R|O|^2 + RR^*O + RRO^*$$

- reconstructing the image from the plane in which it has been detected to the plane in which the material to be analysed is put, by means of numerical calculation of the diffraction integral in the Fresnel approximation with the discrete formulation of the Fresnel integral expressed in terms of the Fourier transform, that is:

$$\Psi(l\Delta x, k\Delta y) = A e^{\frac{i\pi}{\lambda d}(l^2\Delta\xi^2 + k^2\Delta\eta^2)} DFT\left[R(n\Delta, m\Delta y)H(n\Delta, m\Delta y)e^{\frac{i\pi}{\lambda d}(n^2\Delta x^2 + m^2\Delta y^2)}\right]_{l,k}$$

where $\lambda$ is the wavelength of the source, A is a complex constant, $n$, $m$, $l$, $k$ are integers $(-N/2+1 < n, l < N/2$ e $-M/2+1 < m, k < M/2)$, DFT is the discrete Fourier transform, $\Delta x$ and $\Delta y$ are the sampling intervals of the interferogram, d is the distance between the plane of the detection device and the observation plane, and, finally, $\Delta\xi$ and $\Delta\eta$ represent the spatial sampling intervals in the observation plane and are defined by $\Delta\xi = \lambda d/N\Delta x$ and $\Delta\eta = \lambda d/M\Delta y$;

- calculating the phase difference according to the formula:

$$\Delta\phi(l\Delta x, k\Delta y) = \arctan\frac{Im\Psi(l\Delta x, k\Delta y)}{Re\Psi(l\Delta x, k\Delta y)}$$

6. Method according to claim 5, **characterised in that** it comprises comprises a processing step of the digitised hologram array, and a step of reconstruction in the complex plane starting from the digitised hologram processed in the first step, in the reconstruction step being effectuated a discrete Fresnel transformation starting from an array of $V_e$ values, comprising said $V_r$ values of signal intensity values corresponding to as many elementary pixels of the holographic image, the pixel sizes being equal to the holographic image sampling intervals, as well as an integer number $p = V_e - V_r > 0$ of constant values equal to $OS$, corresponding to as many pixels of sizes equal to the ones of the others.

7. Method according to claim 6, **characterised in that** said $p$ constant values are null values ($OS = 0$).

8. Method according to claim 6 or 7, **characterised in that** said $p$ values are arranged externally to said array of $V_r$ values.

9. Method according to claim 8, **characterised in that** said $p$ values are arranged in a symmetrical way.

10. Method according to claim 9, **characterised in that** said $p$ values are arranged in a non-symmetrical way.

11. Method according to any preceding claim 6 to 10, **characterised in that** said number $V_e$ of values is inversely proportional to the desired pixel size to be obtained for the reconstructed image.

12. Method according to any preceding claim 6 to 11, **characterised in that** the digitised hologram is a square array of $V_r = N_r \cdot M_r$ values, each value corresponding to a square pixel of sizes $\Delta x$, $\Delta y$.

13. Method according to claim 12, **characterised in that** the hologram reconstructed in the second step is represented by a square array of $V_e = N_e \cdot M_e$ values, each value corresponding to a square pixel of sizes $\Delta\xi = (\lambda d/N_e\Delta x)$ and $\Delta\eta = (\lambda d/M_e\Delta_y)$, $\lambda$ being the wavelength of the wave beam striking the object of which the hologram is recorded, and d the distance between the detection device and the object of which the hologram is detected, $\Delta\xi$ and $\Delta\eta$ being the reconstructed holographic image sampling intervals.

14. Method according to claim 13, **characterised in that** $N_e = (\lambda d/\Delta x^2)$, $M_e = (\lambda d/\Delta y^2)$, $\Delta\xi = \Delta x$, $\Delta\eta = \Delta y$.

15. Method according to any preceding claim 6 to 14, **characterised in that**, after the second step, if each holographic image sampling interval is not equal or less than a certain threshold, the number of values $p$ added to the digitised hologram array is increased and the second step is carried out again.

16. Method according to claim 15, **characterised in that** said threshold is a function of the signal-to-noise ratio of the holographic image.

17. Apparatus for measuring and two-dimensional mapping of the electro-optical properties of transparent materials, comprising:

- a source (1) of coherent and single-mode electromagnetic beam,
- a system of transmission and projection (2,3,4) of said beam,
- a Reflective Grating Interferometer (5) for the treatment of the projected electromagnetic beam,
- a device (7) for detecting of the electromagnetic beam exiting from the interferometric system and a processing unit (9) for processing the information relevant to the detected electromagnetic beam,
- a cell (6) wherein the material (10) to be analysed has to be placed, the cell (6) and said material (10) being crossable by at least a part of the projected electromagnetic beam, the cell (6) being suited to create an homogeneous electrical field in the material (10),
- **a diffraction grating (5a) on which impacts the part (O) of the electromagnetic beam which has crossed the material (10),** whereby

the apparatus is adapted to implement the method according to any claim 1 to 16.

18. Apparatus according to claim 17, **characterised in that** the electromagnetic beam is let from the source (1) in a single-mode, polarisation-maintaining fibre (3) through the fibre coupling system (2).

19. Apparatus according to claim 17 or 18, **characterised in that** the electromagnetic beam is directed towards the Reflective Grating Interferometer (5) in such a way that at least a part of it crosses the cell (6).

20. Apparatus according to claim 19, **characterised in that** the electromagnetic beam is emitted form an end of the single-mode, polarisation-maintaining fibre (3) towards a parabolic mirror (4), which directs said electromagnetic beam towards the Reflective Grating Interferometer (5), in such a way that a part (O) of the beam crosses the material (10) in the cell (6) and another part (R) arrives undisturbed at the interferometric system (5).

21. Apparatus according to claim 20, **characterised in that** the parabolic mirror (4) is placed at a distance from the end (3') of the single-mode, polarisation-maintaining fibre (3) such that the electromagnetic beam is collimated and expanded to dimensions which are comparable to those of the material (10).

22. Apparatus according to any claim 17 to 21, **characterised in that** the Reflective Grating Interferometer (5) comprises a wave front division interferometer.

23. Apparatus according to any claim 19 to 22, **characterised in that** the Reflective Grating Interferometer (5) comprise a flat mirror (5b) mounted on adjustable supports on which impacts the part (R) of the electromagnetic beam which has not crossed the material (10).

24. Apparatus according to claim 23, when depending on claim 26, **characterised in that** the mirror (5b) is controlled so that the electromagnetic beam is redirected towards the diffraction grating (5a).

25. Apparatus according to claim 23 or 24, **characterised in that** the processing electronic unit (9) generates a signal suited to control said adjustable supports.

26. Apparatus according to any claim 17 to 25, **characterised in that** the processing electronic unit (9) generates signals suited to control the emission of the coherent light by said source (1) and/or the electrical field applied to the material (10).

27. Apparatus according to any claim 17 to 26, **characterised in that** the detection device (7) of the electromagnetic beam is a two-dimensional array of detectors of electromagnetic radiation.

28. Apparatus according to claim 27, **characterised in that** the detection device (7) is a CCD camera,

29. Apparatus according to any claim 17 to 28, **characterised in that** the processing unit (9) processes the data according to step E and/or G of the method according to any claim 1 to 16.

**Patentansprüche**

1. Verfahren zur Messung und zweidimensionalen Abbildung der elektro-optischen Eigenschaften von Materialien, welche für elektromagnetische Strahlung transparent sind, wobei das Verfahren ein Reflektionsgitter-Interferometer (5) verwendet, wobei ein im Wesentlichen kohärenter und monochromatischer, elektromagnetischer Strahl derart auf das zu analysierende, transparente Material projiziert wird, dass der Strahl so weit vergrößert wird, dass er einen zweidimensionalen Querschnitt hat, welcher mit den Abmessungen des zu analysierenden Materials (10) vergleichbar ist,
und den elektromagnetischen Strahl in zwei Teile teilt, so dass ein Teil (0) das Material durchquert und der andere Teil (R) ungehindert fortschreitet, wobei die beiden Strahlen (O, R) auf einem **Beugungsgitter (5a), welches das Rekombinierungselement** des Reflektionsgitter-Interferometers (5) **darstellt,** wieder zusammengesetzt werden,
und der von dem Reflektionsgitter-Interferometer (5) ausgehende Strahl mit Hilfe einer Vorrichtung (7) detektiert wird, welche zur zweidimensionalen Detektierung eines solchen Strahls geeignet ist,
**dadurch gekennzeichnet,**
**dass** das zu analysierende, transparente Material einem homogenen elektrischen Feld ausgesetzt ist und das Verfahren ferner die folgenden, anschließenden Schritte umfasst:

E. Erhalten der Phasenveränderung $\Delta\phi(x,y)$ des elektromagnetischen Strahls (O), welcher das Material (10) durchquert hat, in Bezug auf die des ungehinderten elektromagnetischen Strahls (R) anhand des detektierten elektromagnetischen Strahls, welcher ein zweidimensionales Bild darstellt, mit Hilfe eines Algorithmus der digitalen Holografie;
F. eine Anzahl von P-mal Variieren des Werts des angelegten elektrischen Feldes und Wiederholung der vorangehenden Detektierungsschritte;
G. Berechnen des zweidimensionalen **elektro-optischen Parameters** $r'_{13}$ (x,y) des untersuchten Materials (10) **für jedes Pixel** unter Verwendung der Formel:

$$\Delta\Phi(x, y) = \left(\frac{\pi}{\lambda}\right) \cdot \left[-n_0^3(x, y) \cdot r'_{13}(x, y) \cdot V\right],$$

wobei $\Delta\Phi$ die Phasendifferenz, V der Wert der an das zu analysierende Material (10) angelegten Spannungsdifferenz und $n_0$ der ordentliche Brechungsindex ist.

2. Verfahren gemäß Anspruch 1, **dadurch gekennzeichnet, dass** das zu analysierende, transparente Material (10) ein nicht-zentrumsymmetrischer Kristall ist.

3. Verfahren gemäß Anspruch 1 oder 2, **dadurch gekennzeichnet, dass** die zur Oberfläche senkrechte Dimension des Materials (10), dessen zweidimensionale elektro-optischen Eigenschaften man detektiert, eine Dicke von weniger als 5 mm hat.

4. Verfahren gemäß Anspruch 3, **dadurch gekennzeichnet, dass** die zur Oberfläche senkrechte Dimension des Materials (10), dessen zweidimensionale elektro-optischen Eigenschaften man detektiert, eine Dicke von weniger als 0,5 mm hat.

**5.** Verfahren gemäß einem der Ansprüche 1 bis 4, **dadurch gekennzeichnet, dass** der Algorithmus der digitalen Holografie die numerische Berechnung des Beugungsintergrals in der Fresnel-Näherung gemäß den folgenden Schritten verwendet:

- Umwandeln des detektierten interferometrischen Bildes in ein digitalisiertes Interferogramm, welches zusammengesetzt ist aus einer Anzahl von $V_r$ Signalintensitätswerten, beschrieben durch eine Matrix $H(n \cdot \Delta x, m \cdot \Delta y)$ von $N \cdot M$ Werten, wobei n und m ganze Zahlen und und $\Delta y$ die Abtastintervalle entlang der x- bzw. der y-Achse sind und $(N \cdot \Delta x)(M \cdot \Delta y)$ die Fläche des erhaltenen Hologramms ist;
- Multiplizieren des digitalisierten Hologramms $H(n \cdot \Delta x, m \cdot \Delta y)$ mit einer digitalisierten Replik des Referenzstrahls $R(n \cdot \Delta x, m \cdot \Delta y)$, wobei die Beziehung erhalten wird:

$$H(n\Delta x, m\Delta y) \cdot R(n\Delta x, m\Delta y) = R|R|^2 + R|O|^2 + RR*O + RRO*$$

- Rekonstruieren des Bildes aus der Ebene, in welcher es detektiert wurde, in die Ebene, in welche das zu analysierende Material gelegt ist, mit Hilfe einer numerischen Berechnung des Beugungsintergrals in der Fresnel-Näherung mit der diskreten Formulierung des Fresnel-Integrals, ausgedrückt durch die Fourier-Transformation, nämlich:

$$\Psi(l\Delta x, k\Delta y) = \Lambda e^{\frac{i\pi}{\lambda d}\left(l^2 \Delta \xi^2 + k^2 \Delta \eta^2\right)} DFT\left[R(n\Delta, m\Delta y)H(n\Delta, m\Delta y)e^{\frac{i\pi}{\lambda d}\left(n^2 \Delta x^2 + m^2 \Delta y^2\right)}\right]_{l,k},$$

- wobei $\lambda$ die Wellenlänge der Quelle, A eine komplexe Konstante, n, m, l, k ganze Zahlen (-N/2+1<n,1<N/2 e -M/2+1<m,k<M/2), DFT die diskrete Fourier-Transformation, $\Delta x$ und $\Delta y$ die Abtastintervalle des Interferogramms sind, d die Entfernung zwischen der Ebene der Detektierungsvorrichtung und der Beobachtungsebene ist, und zuletzt, $\Delta \xi$ und $\Delta \eta$ die räumlichen Abtastintervalle in der Beobachtungsebene darstellen und definiert sind durch $\Delta \xi = \lambda d/N\Delta x$ und $\Delta \eta = \lambda d/M\Delta y$;
- Berechnung der Phasendifferenz gemäß der Formel:

$$\Delta \phi(l\Delta x, k\Delta y) = \arctan \frac{lm\Psi(l\Delta x, k\Delta y)}{\text{Re } \Psi(l\Delta x, k\Delta y)}.$$

**6.** Verfahren gemäß Anspruch 5, **dadurch gekennzeichnet, dass** es einen Verarbeitungsschritt der digitalisierten Hologram-Matrix und einen Rekonstruktionsschritt in der komplexen Ebene, ausgehend von dem im ersten Schritt verarbeiteten digitalisierten Hologramm, aufweist, wobei in dem Rekonstruktionsschritt eine diskrete Fresnel-Transformation bewirkt wird, ausgehend von einer Matrix aus $V_e$ Werten, umfassend die genannten $V_r$ Werte von Signalintensitätswerten, welche derselben Anzahl von Elementarpixeln des holografischen Bildes entsprechen, wobei die Pixelgrößen gleich den Abtastintervallen des holografischen Bildes sind, sowie eine ganze Anzahl $p = V_e - V_r > 0$ von konstanten Werten gleich OS, welche der gleichen Anzahl von Pixeln mit Größen gleich denen der anderen entsprechen.

**7.** Verfahren gemäß Anspruch 6, **dadurch gekennzeichnet, dass** die p konstanten Werte Null-Werte (OS=0) sind.

**8.** Verfahren gemäß Anspruch 6 oder 7, **dadurch gekennzeichnet, dass** die p Werte außerhalb der Matrix aus $V_r$ Werten angeordnet sind.

**9.** Verfahren gemäß Anspruch 8, **dadurch gekennzeichnet, dass** die p Werte symmetrisch angeordnet sind.

**10.** Verfahren gemäß Anspruch 9, **dadurch gekennzeichnet, dass** die p Werte nicht-symmetrisch angeordnet sind.

**11.** Verfahren gemäß einem der vorhergehenden Ansprüche 6 bis 10, **dadurch gekennzeichnet, dass** die Anzahl $V_e$ von Werten indirekt proportional zu der für das rekonstruierte Bild zu erhaltenden, gewünschten Pixelgröße ist.

**12.** Verfahren gemäß einem der vorhergehenden Ansprüche 6 bis 11, **dadurch gekennzeichnet, dass** das digitalisierte Hologramm eine rechteckige Matrix von $V_r=N_r \cdot M_r$ Werten ist, wobei jeder Wert einem rechteckigen Pixel der Größen $\Delta x, \Delta y$ entspricht.

**13.** Verfahren gemäß Anspruch 12, **dadurch gekennzeichnet, dass** das im zweiten Schritt rekonstruierte Hologramm durch eine rechteckige Matrix aus $V_e = N_e \cdot M_e$ Werten dargestellt wird, wobei jeder Wert einem rechteckigen Pixel der Größe $\Delta\xi=(\lambda d/N_e \Delta x)$ und $\Delta\eta=(\lambda d/M_e \Delta y)$ entspricht, und wobei $\lambda$ die Wellenlänge des Wellenstrahls ist, welcher das Objekt trifft, dessen Hologramm aufgezeichnet wird, d die Entfernung zwischen der Detektierungsvorrichtung und dem Objekt, dessen Hologramm detektiert wird, ist und $\Delta\xi$ und $\Delta\eta$ die Abtastintervalle des rekonstruierten, holografischen Bildes sind.

**14.** Verfahren gemäß Anspruch 13, **dadurch gekennzeichnet, dass** $N_e=(\lambda d/\Delta x^2), M_e=(\lambda d/\Delta y^2)$, $\Delta\xi=\Delta x, \Delta\eta$ gilt.

**15.** Verfahren gemäß einem der vorhergehenden Ansprüche 6 bis 14, **dadurch gekennzeichnet, dass** nach dem zweiten Schritt, wenn jedes Abtastintervall des holografischen Bildes nicht kleiner oder gleich einem bestimmten Schwellwert ist, die Anzahl p der zur digitalisierten Hologramm-Matrix hinzugefügten Werte erhöht wird und der zweite Schritt erneut ausgeführt wird.

**16.** Verfahren gemäß Anspruch 15, **dadurch gekennzeichnet, dass** der genannte Schwellwert eine Funktion des Signal-zu-Untergrund Verhältnisses des holografischen Bildes ist.

**17.** Vorrichtung zum Messen und zweidimensionalen Abbilden der elektro-optischen Eigenschaften von transparenten Materialien, umfassend:

- eine Quelle (1) eines kohärenten elektromagnetischen Einmoden-Strahls,
- ein Transmissions- und Projektionssystem (2, 3, 4) des Strahls,
- ein Reflektionsgitter-Interferometer (5) für die Behandlung des projizierten elektromagnetischen Strahls,
- eine Vorrichtung (7) zur Detektierung des von dem interferometrischen System ausgehenden elektromagnetischen Strahls und eine Verarbeitungseinheit (9) zur Verarbeitung der für den detektierten elektromagnetische Strahl relevanten Information,
- eine Zelle (6), worin das zu analysierende Material (10) platziert werden muss, wobei die Zelle (6) und das Material (10) von wenigstens einem Teil des projizierten elektromagnetischen Strahls durchquert werden können, und die Zelle (6) geeignet ist, ein homogenes elektrisches Feld in dem Material (10) zu erzeugen,
- ein Beugungsgitter (5a), auf welches der Teil (O) des elektromagnetischen Strahls auftrifft, welcher das Material (10) durchquert hat, wobei der Apparat eingerichtet ist, dass Verfahren gemäß einem der Ansprüche 1 bis 16 auszuführen.

**18.** Vorrichtung gemäß Anspruch 17, **dadurch gekennzeichnet, dass** der elektromagnetische Strahl von der Quelle (1) in einer polarisationserhaltenden Einmodenfaser (3) durch das Faserkopplungssystem (2) geleitet (gelassen) wird.

**19.** Vorrichtung gemäß Anspruch 17 oder 18, **dadurch gekennzeichnet, dass** der elektromagnetische Strahl derart auf das Reflektionsgitter-Interferometer (5) hin ausgerichtet ist, dass wenigstens ein Teil davon die Zelle (6) durchquert.

**20.** Vorrichtung gemäß Anspruch 19, **dadurch gekennzeichnet, dass** der elektromagnetische Strahl von einem Ende der polarisationserhaltenden Einmodenfaser (3) in Richtung eines Parabolspiegels (4) emittiert wird, welcher den elektromagnetischen Strahl in Richtung des Reflektionsgitter-Interferometers (5) lenkt, so dass ein Teil (0) des Strahls das Material (10) in der Zelle (6) durchquert und ein anderer Teil (R) ungehindert bei dem interferometrischen System (5) ankommt.

**21.** Vorrichtung gemäß Anspruch 20, **dadurch gekennzeichnet, dass** der Parabolspiegel (4) in einer Entfernung von dem Ende (3') der polarisationserhaltenden Einmodenfaser (3) platziert ist, so dass der elektromagnetische Strahl kollimiert und auf Abmessungen aufgeweitet wird, welche mit denen des Materials (10) vergleichbar sind.

**22.** Vorrichtung gemäß einem der Ansprüche 17 bis 21, **dadurch gekennzeichnet, dass** das Reflektionsgitter-Interferometer (5) ein Wellenfrontteilungs-Interferometer umfasst.

**23.** Vorrichtung gemäß einem der Ansprüche 19 bis 22, **dadurch gekennzeichnet, dass** das Reflektionsgitter-Interferometer (5) einen auf einstellbare Stützen montierten, flachen Spiegel (5b) umfasst, auf welchen der Teil (R) des elektromagnetischen Strahls auftrifft, welcher das Material (10) nicht durchquert hat.

**24.** Vorrichtung gemäß Anspruch 23, wenn abhängig von Anspruch 26, **dadurch gekennzeichnet, dass** der Spiegel (5b) so gesteuert ist, dass der elektromagnetische Strahl in Richtung des Beugungsgitters (5a) umgelenkt wird.

**25.** Vorrichtung gemäß Anspruch 23 oder 24, **dadurch gekennzeichnet, dass** die elektronische Verarbeitungseinheit (9) ein zur Steuerung der einstellbaren Stützen geeignetes Signal erzeugt.

**26.** Vorrichtung gemäß einem der Ansprüche 17 bis 25, **dadurch gekennzeichnet, dass** die elektronische Verarbeitungseinheit (9) Signale erzeugt, welche geeignet sind, die Ausstrahlung des kohärenten Lichts durch die Quelle (1) und/oder das an das Material (10) angelegte elektrische Feld zu steuern.

**27.** Vorrichtung gemäß einem der Ansprüche 17 bis 26, **dadurch gekennzeichnet, dass** die Detektierungsvorrichtung (7) des elektromagnetischen Strahls eine zweidimensionale Matrix von Detektoren für elektromagnetischen Strahlung ist.

**28.** Vorrichtung gemäß Anspruch 27, **dadurch gekennzeichnet, dass** die Detektierungsvorrichtung (7) eine CCD-Kamera ist.

**29.** Vorrichtung gemäß einem der Ansprüche 17 bis 28, **dadurch gekennzeichnet, dass** die Verarbeitungseinheit (9) die Daten gemäß Schritt E und/oder G des Verfahrens gemäß einem der Ansprüche 1 bis 16 verarbeitet.

**Revendications**

**1.** Procédé de mesure et de cartographie bidimensionnelle des propriétés électro-optiques de matériaux transparents au rayonnement électromagnétique, le procédé utilisant un interféromètre à réseau de réflexion (5) dans lequel un faisceau électromagnétique sensiblement cohérent et monochromatique est projeté sur le matériau transparent à analyser, de telle manière que le faisceau est agrandi jusqu'à avoir une section transversale bidimensionnelle comparable aux dimensions du matériau (10) à analyser, et en divisant ledit faisceau électromagnétique en deux parties, de telle manière qu'une partie traverse le matériau (O), que le parcours de l'autre partie n'est pas perturbé (R), les deux faisceaux (O,R) étant recomposés sur un réseau de diffraction (5a) représentant l'élément de recombinaison de l'interféromètre à réseau de réflexion (5), le faisceau sortant dudit interféromètre à réseau de réflexion (5) étant détecté à l'aide d'un dispositif (7) convenant à la détection bidimensionnelle d'un tel faisceau, **caractérisé en ce que** le matériau transparent à analyser est soumis à un champ électrique homogène, et le procédé comprend en outre les étapes ultérieures suivantes :

E. l'obtention, à l'aide d'un algorithme d'holographie numérique, à partir du faisceau électromagnétique détecté, lequel est représentatif d'une image bidimensionnelle, de la variation de phase $\Delta\phi(x,y)$ du faisceau électromagnétique (O) ayant traversé le matériau (10) par rapport à celle du faisceau électromagnétique non perturbé (R) ;
F. un certain nombre de fois P, la variation de la valeur du champ électrique appliqué et la répétition des étapes de détection précédentes ;
G. le calcul, pour chaque pixel, du paramètre électro-optique bidimensionnel $r'_{13}(x,y)$ du matériau (10) étudié, en utilisant la formule :

$$\Delta\Phi(x,y) = \left(\frac{\pi}{\lambda}\right) \cdot \left[ -n_0^3(x,y) \cdot r'_{13}(x,y) \cdot V \right]$$

où $\Delta\phi$ est la différence de phase, V est la valeur de la différence de tension appliquée au matériau (10) à analyser, et $n_0$ est l'indice de réfraction ordinaire.

**2.** Procédé selon la revendication 1, **caractérisé en ce que** ledit matériau transparent (10) à analyser est un cristal sans symétrie centrale.

**3.** Procédé selon la revendication 1 ou 2, **caractérisé en ce que** la dimension perpendiculaire à la surface du matériau (10), dont on détecte les propriétés électro-optiques bidimensionnelles, a une épaisseur inférieure à 5 mm.

**4.** Procédé selon la revendication 3, **caractérisé en ce que** la dimension perpendiculaire à la surface du matériau (10), dont on détecte les propriétés électro-optiques bidimensionnelles, a une épaisseur inférieure à 0,5 mm.

**5.** Procédé selon l'une quelconque des revendications 1 à 4, **caractérisé en ce que** l'algorithme d'holographie numérique utilise le calcul numérique de l'intégrale de diffraction dans l'approximation de Fresnel, selon les étapes suivantes :

- la transformation de l'image interférométrique détectée en interférogramme numérisé, composé par un certain nombre de valeurs $Vr$ d'intensité de signal, décrites par un tableau $H(n \cdot \Delta x, m \cdot \Delta y)$ de $N \cdot M$ valeurs, où n et m sont des nombres entiers, $\Delta x$ et $\Delta y$ sont les intervalles d'échantillonnage respectivement le long de l'axe x et y et $(N \cdot \Delta x)(M \cdot \Delta y)$ est l'aire de l'hologramme acquis ;
- la multiplication de l'hologramme numérisé $H(n \cdot \Delta x, m \cdot \Delta y)$ par une réplique numérisée du faisceau de référence $R(n \cdot \Delta x, m \cdot \Delta y)$, de façon à obtenir la relation :

$$H(n\Delta x, m\Delta y) \cdot R(n\Delta x, m\Delta y) = R|R|^2 + R|O|^2 + RR^*O + RRO^*$$

- la reconstruction de l'image à partir du plan dans lequel elle a été détectée vers le plan dans lequel le matériau à analyser est placé, à l'aide du calcul numérique de l'intégrale de diffraction dans l'approximation de Fresnel avec la formulation discrète de l'intégrale de Fresnel exprimée en termes de transformée de Fourier, à savoir :

$$\Psi(l\Delta x, k\Delta y) = Ae^{\frac{i\pi}{\lambda d}(l^2\Delta \xi^2 + k^2\Delta \eta^2)} DFT[R(n\Delta, m\Delta y)H(n\Delta, m\Delta y)e^{\frac{i\pi}{\lambda d}(n^2\Delta x^2 + m^2\Delta y^2)}]_{l,k}$$

où λ est la longueur d'onde de la source, A est une constante complexe, *n, m, l,* k sont des nombres entiers *(-N/2+l<n,l<N/2* e *-M/2+l<m,k<M/2)*, *DFT* est la transformée de Fourier discrète, $\Delta x$ et $\Delta y$ sont les intervalles d'échantillonnage de l'interférogramme, d est la distance entre le plan du dispositif de détection et le plan d'observation et, enfin, Δ· et Δ· représentent les intervalles d'échantillonnage spatial dans le plan d'observation et sont définis par Δ·=λd/NΔx et Δ· =λd/MΔy;
- le calcul de la différence de phase selon la formule :

$$\Delta\phi(l\Delta x, k\Delta y) = \arctan \frac{\text{Im}\Psi(l\Delta x, k\Delta y)}{\text{Re}\Psi(l\Delta x, k\Delta y)}$$

**6.** Procédé selon la revendication 5, **caractérisé en ce qu'**il comprend une étape de traitement du tableau hologramme numérisé, et une étape de reconstruction dans le plan complexe à partir de l'hologramme numérisé traité dans la première étape, dans l'étape de reconstruction étant effectuée une transformée de Fresnel discrète à partir d'un tableau de $V_e$ valeurs, comprenant lesdites $V_r$ valeurs d'intensité de signal correspondant à autant de pixels élémentaires de l'image holographique, les tailles de pixel étant égales aux intervalles d'échantillonnage de l'image holographique, ainsi qu'un nombre entier $p = V_e - V_r > 0$ de valeurs constantes égales à OS, correspondant à autant de pixels de tailles égales à celles des autres.

**7.** Procédé selon la revendication 6, **caractérisé en ce que** lesdites $p$ valeurs constantes sont des valeurs nulles (OS = 0).

**8.** Procédé selon la revendication 6 ou 7, **caractérisé en ce que** lesdites *p* valeurs sont disposées à l'extérieur dudit tableau de V$_r$ valeurs.

**9.** Procédé selon la revendication 8, **caractérisé en ce que** lesdites *p* valeurs sont disposées de manière symétrique.

**10.** Procédé selon la revendication 9, **caractérisé en ce que** lesdites *p* valeurs sont disposées de manière non symétrique.

**11.** Procédé selon l'une quelconque des revendications précédentes 6 à 10, **caractérisé en ce que** ledit nombre V$_e$ de valeurs est inversement proportionnel à la taille de pixel souhaitée devant être obtenue pour l'image reconstruite.

**12.** Procédé selon l'une quelconque des revendications précédentes 6 à 11, **caractérisé en ce que** l'hologramme numérisé est un tableau carré de $V_r = N_r \cdot M_r$ valeurs, chaque valeur correspondant à un pixel carré de tailles $\Delta x, \Delta y$.

**13.** Procédé selon la revendication 12, **caractérisé en ce que** l'hologramme reconstruit dans la seconde étape est représenté par un tableau carré de $V_e = N_e \cdot M_e$ valeurs, chaque valeur correspondant à un pixel carré de tailles $\Delta \cdot = (\lambda d / N_e \Delta x)$ et $\Delta \cdot = (\lambda d / M_e \Delta y)$, $\lambda$ étant la longueur d'onde du faisceau d'ondes frappant l'objet dont l'hologramme est enregistré, et d la distance entre le dispositif de détection et l'objet dont l'hologramme est détecté, $\Delta \cdot$ et $\Delta \cdot$ étant les intervalles d'échantillonnage de l'image holographique reconstruite.

**14.** Procédé selon la revendication 13, **caractérisé en ce que** $N_e = (\lambda d / \Delta x^2)$, $M_e = (\lambda d / \Delta y^2)$, $\Delta \cdot = \Delta x$, $\Delta \cdot = \Delta y$.

**15.** Procédé selon l'une quelconque des revendications précédentes 6 à 14, **caractérisé en ce que**, après la seconde étape, si chaque intervalle d'échantillonnage de l'image holographique n'est pas inférieur ou égal à un certain seuil, le nombre de valeurs *p* ajouté au tableau hologramme numérisé est augmenté et la seconde étape est effectuée à nouveau.

**16.** Procédé selon la revendication 15, **caractérisé en ce que** ledit seuil est fonction du rapport signal sur bruit de l'image holographique.

**17.** Appareil de mesure et de cartographie bidimensionnelle des propriétés électro-optiques de matériaux transparents, comprenant :

- une source (1) de faisceau électromagnétique cohérent et monomode,
- un système de transmission et de projection (2, 3, 4) dudit faisceau,
- un interféromètre à réseau de réflexion (5) pour le traitement du faisceau électromagnétique projeté,
- un dispositif (7) pour la détection du faisceau électromagnétique sortant du système interférométrique et une unité de traitement (9) pour le traitement des informations relatives au faisceau électromagnétique détecté,
- une cellule (6) dans laquelle le matériau (10) à analyser doit être placée, la cellule (6) et ledit matériau (10) pouvant être traversés par au moins une partie du faisceau électromagnétique projeté, la cellule (6) étant appropriée pour créer un champ électrique homogène dans le matériau (10),
- un réseau de diffraction (5a) sur lequel vient frapper la partie (O) du faisceau électromagnétique ayant traversé le matériau (10),

moyennant quoi l'appareil est adapté à la mise en oeuvre du procédé selon l'une quelconque des revendications 1 à 16.

**18.** Appareil selon la revendication 17, **caractérisé en ce que** le faisceau électromagnétique est délivré à partir de la source (1) dans une fibre monomode à conservation de polarisation (3) par l'intermédiaire du système de couplage de fibres (2).

**19.** Appareil selon la revendication 17 ou 18, **caractérisé en ce que** le faisceau électromagnétique est dirigé vers l'interféromètre à réseau de réflexion (5) de telle manière qu'il traverse au moins en partie la cellule (6).

**20.** Appareil selon la revendication 19, **caractérisé en ce que** le faisceau électromagnétique est émis depuis une extrémité de la fibre monomode à conservation de polarisation (3) vers un miroir parabolique (4), lequel dirige ledit faisceau électromagnétique vers l'interféromètre à réseau de réflexion (5), de telle manière qu'une partie (O) du faisceau traverse le matériau (10) dans la cellule (6) et qu'une autre partie (R) arrive non perturbée au niveau du système interférométrique (5).

**21.** Appareil selon la revendication 20, **caractérisé en ce que** le miroir parabolique (4) est placé à une distance de l'extrémité (3') de la fibre monomode à conservation de polarisation (3) telle que le faisceau électromagnétique est collimaté et expansé à des dimensions qui sont comparables à celles du matériau (10).

**22.** Appareil selon l'une quelconque des revendications 17 à 21, **caractérisé en ce que** l'interféromètre à réseau de réflexion (5) comprend un interféromètre à division du front d'onde.

**23.** Appareil selon l'une quelconque des revendications 19 à 22, **caractérisé en ce que** l'interféromètre à réseau de réflexion (5) comprend un miroir plat (5b) monté sur des supports réglables sur lequel vient frapper la partie (R) du faisceau électromagnétique n'ayant pas traversé le matériau (10).

**24.** Appareil selon la revendication 23, lorsqu'elle est dépendante de la revendication 26, **caractérisé en ce que** le miroir (5b) est commandé de façon à ce que le faisceau électromagnétique soit redirigé vers le réseau de diffraction (5a).

**25.** Appareil selon la revendication 23 ou 24, **caractérisé en ce que** l'unité électronique de traitement (9) engendre un signal approprié pour commander lesdits supports réglables.

**26.** Appareil selon l'une quelconque des revendications 17 à 25, **caractérisé en ce que** l'unité électronique de traitement (9) engendre des signaux appropriés pour commander l'émission de la lumière cohérente par ladite source (1) et/ou le champ électrique appliqué au matériau (10).

**27.** Appareil selon l'une quelconque des revendications 17 à 26, **caractérisé en ce que** le dispositif de détection (7) du faisceau électromagnétique est une matrice bidimensionnelle de détecteurs de rayonnement électromagnétique.

**28.** Appareil selon la revendication 27, **caractérisé en ce que** le dispositif de détection (7) est une caméra CCD.

**29.** Appareil selon l'une quelconque des revendications 17 à 28, **caractérisé en ce que** l'unité de traitement (9) traite les données selon l'étape E et/ou G du procédé selon l'une quelconque des revendications 1 à 16.

**FIG. 1**

**FIG. 2**

FIG. 3

**FIG. 4**

**FIG. 5**

**FIG. 6**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- IT RM960178 A

- IT RM20030398 A

### Non-patent literature cited in the description

- **A. Yariv.** Quantum Electronics. Wiley, 1988
- **P. C. Lemaire ; M. P. Georges.** *Optical Material,* 1995, vol. 4, 182-187
- **K. Chah ; M. Aillerie ; M. D. Fontana ; G. Malovichko.** *Optics Communication,* 2000, vol. 176, 261-265
- **P. Ney ; A. Maillard ; M. D. Fontana ; K. Polgàr.** *J. Opt. Soc. Am. B,* 2000, vol. 17, 1158-1165
- **P. Delaye ; G. Roosen.** *Optics Communication,* 2002, vol. 214, 199-206
- **J. A. de Toro ; M. D. Serrano ; A. Garcìa Cabañes ; J. M. Cabrera.** *Optics Communication,* 1998, vol. 154, 23-27
- **X. Yin ; Q. Pan ; W. Shi ; C. Fang.** *Applied Optics,* 2002, vol. 41, 5929-5932
- **J. Koo ; C. Lee ; J. H. Jang ; K. No ; B. Bae.** *Applied Physics Letters,* 2000, vol. 76, 2671-2673
- **Storrow G.M. et al.** An analysis of the optical properties of a single-element liquid crystal device. *Pure and Applied Optics IOP Publishing UK,* November 1998, vol. 7 (6), 1411-1423
- **De Angelis et al.** Interferometric analysis of a lithium niobate with engineering reversed domains. *Proceedings of the SPIE SPIE-Int- Soc. Opt. Eng. USA,* 2003, vol. 5144, 745-752
- **M. de Angelis et al.** *Pure and Applied Optics,* 1995, vol. 24, 761-765
- **S. De Nicola et al.** *Optics Letters,* 2001, vol. 26 (13), 974-876